# EUROPEAN PATENT SPECIFICATION

(11) **EP 4 538 565 B1**
(45) Date of publication and mention of the grant of the patent: **17.06.2026**
(21) Application number: 24199490.4
(22) Date of filing: 10.09.2024
(51) Int. Cl.: F16K 1/54, F16K 31/06

(54) **ELECTRICALLY DRIVEN VALVE**
ELEKTRISCH ANGETRIEBENES VENTIL
SOUPAPE À COMMANDE ÉLECTRIQUE

(30) Priority: 12.10.2023 JP 2023176978
(43) Date of publication of application: 16.04.2025
(73) Proprietor: Fujikoki Corporation, Tokyo 158-0082 (JP)
(72) Inventor: YAZAWA, Masashi, Tokyo (JP); SUGANUMA, Takeshi, Tokyo, 1580082 (JP)
(74) Representative: Ter Meer Steinmeister & Partner

(56) References cited:
- EP-A1- 3 591 266
- CN-A- 111 946 833
- US-A- 4 213 021
- US-A- 4 610 424
- US-B2- 6 874 751

## Description

### BACKGROUND OF THE INVENTION

### Field of the Invention

The present invention relates to an electrically driven valve.

### Description of the Related Art

Heretofore, electrically driven valves are arranged on a piping route of fluid and used as an equipment for opening and closing or for performing flow rate control of the flow path of fluid. In such electrically driven valves, accurate flow rate control is ensured by driving a valve element using a driving source, such as a stepping motor, disposed on a valve main body, as described in Japanese Patent Application Laid-Open Publication No. 2017-180525.

In electrically driven valves, it may be required to perform a valve opening control, in which fluid is flown by a low flow rate by maintaining a minute opening state of the valve that is realized immediately after opening the valve. Even during such a minute opening state, it is necessary to suppress fluctuation of flow rate of fluid passing through an orifice.

In order to ensure a stable flow rate control in the minute opening state, there has been developed an electrically driven valve in which an inner circumference of the orifice has a long and narrow cylindrical shape, and an outer circumference of the valve element disposed within the orifice also has a long and narrow cylinder shape. In such an electrically driven valve, in a case where the valve element is relatively displaced in an axial direction with respect to the orifice, a cross-sectional area of the flow path of a gap formed between the orifice and the valve element is constant until the valve element is withdrawn from the orifice, such that the flow rate control of fluid passing through the gap may be performed stably.

However, in order to realize the configuration described above, it is necessary to form the inner circumference of the orifice and the outer circumference of the valve element opposed thereto to have a highly accurate cylindrical shape across a certain length, which requires time-consuming processing and may lead to increase of costs of the electrically driven valve.

The present invention aims at providing an electrically driven valve that may be processed easily and that requires lower costs, while still ensuring desired flow rate characteristics.

US 4,213,021 A discloses a valve apparatus having a poppet valve carrying an magnet and a switch responsive to movements of the magnet. A spring biased poppet valve is movable from a closed position under the influence of a predetermined fluid flow rate in one direction to an open, switch activating position and then is returned upon a slight reduction in fluid flow in the opposite direction passed the switch activating position to a switch deactivating position intermediate the letter and the valve close position. The valve is formed with a specially configured nose portion to provide poppet valve travel at predetermined fluid flow rates to activate and deactivate the switch.

US 4,610,424 A discloses a shut-off valve having a sealing cone which in a close position abuts against a conical sealing seat and is formed as a part of a cylindrical throttling piston, a sealing surface of the sealing seat cooperates at its one end with a cylindrical receiving opening for the throttling piston, and the outer diameter of the throttling piston is selected with respect to the inner diameter of the receiving opening so that the throttling gap is formed between the receiving opening and the throttling piston.

US 6,874,751 B2 discloses an electromagnetic valve including a plunger assembly having a plunger, a coil for driving the plunger, a fixed core disposed in a direction in which the plunger is displaced for attracting the plunger assembly to a retracted position upon electrical energization of the coil to thereby hold the plunger at a position, a resilient member disposed, being compressed, between the plunger and the fixed core to resiliently urge the plunger assembly to an advanced position, and a spacer interposed between the plunger and the fixed core.

### SUMMARY OF THE INVENTION

The electrically driven valve according to the present invention comprises the features of claim 1. Preferred embodiments are defined in the subclaims.

The present technique enables to provide an electrically driven valve that may be processed easily and that requires lower costs, while still ensuring desired flow rate characteristics.

### BRIEF DESCRIPTION OF THE DRAWINGS

FIG. 1 is a vertical cross-sectional view illustrating an electrically driven valve according to a first embodiment.
FIG. 2 is a view schematically illustrating a periphery of an orifice portion and a valve element portion of the electrically driven valve according to the first embodiment.
FIG. 3 is a characteristic diagram of flow rate of the electrically driven valve according to the first embodiment, wherein a vertical axis shows a flow rate and a horizontal axis shows a valve opening, i.e., axial direction position of a valve shaft.
FIG. 4 is a cross-sectional view illustrating a periphery of a valve element portion and an orifice portion according to a comparative example illustrated in comparison with FIG. 2, not representing the invention.
FIG. 5 is a view schematically illustrating a periphery of an orifice portion and a valve element portion of an electrically driven valve according to a second embodiment.
FIG. 6 is a flow rate characteristic diagram of the electrically driven valve according to the second embodiment, wherein the vertical axis shows a flow rate and the horizontal axis shows a valve opening, i.e., axial direction position of a valve shaft.

### DETAILED DESCRIPTION OF THE PREFERRED EMBODIMENTS

Embodiments of an electrically driven valve according to the present invention will be described below with reference to the drawings.

### [First Embodiment]

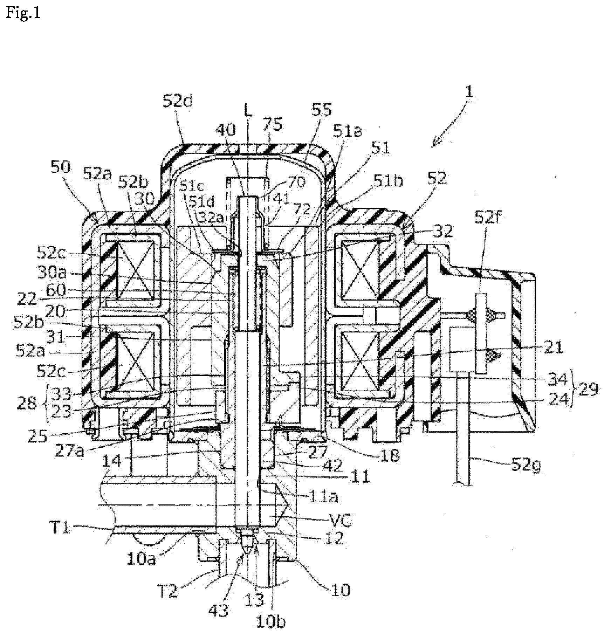

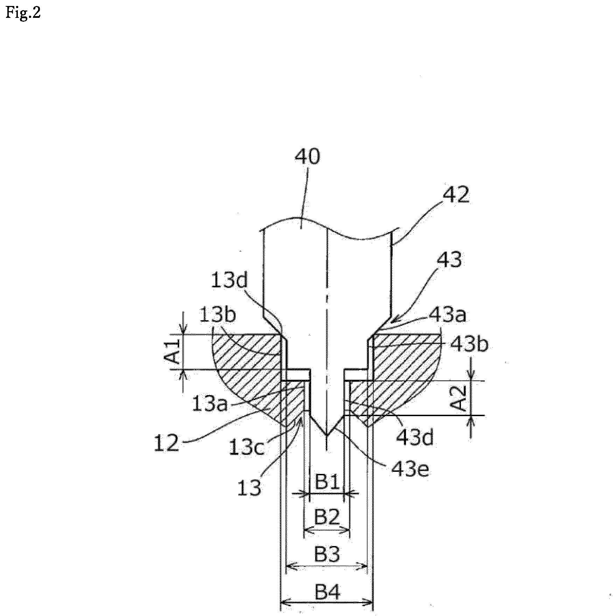

FIG. 1 is a vertical cross-sectional view illustrating an electrically driven valve 1 according to the first embodiment. FIG. 2 is a view schematically illustrating a periphery of an orifice portion and a valve element portion of the electrically driven valve 1, wherein a part thereof is not shown in the drawing. An axis of the electrically driven valve 1 is denoted by L. According further to the present specification, a direction from a rotor toward a valve seat is called downward, and a direction opposite thereto is called upward.

In FIG. 1, the electrically driven valve 1 is equipped with a valve main body 10, a guide bush 20, a valve shaft holder 30, a valve shaft 40, a can 55, a stepping motor 50 composed of a rotor 51 and a stator 52, a compression coil spring, i.e., urging member, 60, a locking member 70, a screw feeding mechanism 28, and a lower portion stopper mechanism 29. In the present embodiment, the stepping motor 50 and the screw feeding mechanism 28 constitute a valve shaft driving portion.

A flange-like plate 18 is fixed by brazing etc. to an upper end portion of the valve main body 10. A lower end portion of the can 55 having a cylindrical shape with a top portion is abutted against a stepped portion provided on an outer circumference of the flange-like plate 18, and joined thereto in a sealed manner by welding.

The rotor 51 is rotatably arranged on an inner side of the can 55 and on an outer side of the guide bush 20 and the valve shaft holder 30, and the stator 52 for driving the rotor 51 to rotate is arranged on an outer side of the can 55. The stator 52 is composed of a yoke 52a, a bobbin 52b, a stator coil 52c, and a resin mold cover 52d etc. The stator coil 52c receives input of a control signal including a drive pulse from an exterior via a board 52f to which a lead wire 52g is connected, and the rotor 51 arranged within the can 55 is driven to rotate about an axis L according to an angle corresponding to the drive pulse by excitation of the stator coil 52c.

The rotor 51 arranged within the can 55 is fit to and supported by the valve shaft holder 30, and the valve shaft holder 30 is designed to rotate integrally with the rotor 51.

Specifically, the rotor 51 adopts a duplex tube configuration composed of an inner tube 51a, an outer tube 51b, and a connecting portion 51c that connects the inner tube 51a and the outer tube 51b at a predetermined angular position about the axis L, wherein a plurality of vertical grooves 51d that extend in the axis L direction, i.e., up-down direction, are formed at an angular interval of 120 degrees about the axis L on the inner circumference of the inner tube 51a.

A plurality of ribs 30a that extend in the up-down direction at an angular interval of 120 degrees about the axis L are formed in a protruded manner on the upper half portion of the outer circumference of the valve shaft holder 30. A locking surface (not shown) facing upward and supporting the rotor 51 is formed on both sides at the lower portion of the ribs 30a.

By having the vertical grooves 51d on the inner tube 51a of the rotor 51 engage with the ribs 30a of the valve shaft holder 30, and having the lower surface of the inner tube 51a of the rotor 51 abut against the locking surface of the valve shaft holder 30, the rotor 51 is supported and fixed in a state positioned against the valve shaft holder 30. Thereby, the valve shaft holder 30 rotates together with the rotor 51 while supporting the rotor 51 within the can 55.

The locking member 70 having a tubular shape that prevents relative movement of the valve shaft holder 30 and the rotor 51 in the lifting and lowering direction, is disposed on an upper side of the rotor 51 and the valve shaft holder 30. The locking member 70 pushes the rotor 51 downward against the valve shaft holder 30, and connects the valve shaft 40 and the valve shaft holder 30.

An upper portion of the locking member 70 is externally fit to an upper end portion of an upper small-diameter portion 41 of the valve shaft 40 and fixed thereto by press fitting, welding, or the like. A flange-shaped rotor presser 72 is disposed at a lower portion of the locking member 70. The rotor 51 is nipped between the rotor presser 72 and the valve shaft holder 30 that is urged upward by the urging force of the compression coil spring 60. A height in an up-down direction of the valve shaft holder 30 from an upper end to the locking surface is the same height in the up-down direction of the inner tube 51a of the rotor 51, and an upper surface of a top portion 32 of the valve shaft holder 30 is abutted against a lower surface of the rotor presser 72.

A return spring 75 composed of a coil spring is externally disposed on an outer circumference of the locking member 70. The return spring 75 urges the valve shaft holder 30 toward the guide bush 20, such that if screw engagement between a male screw portion 23 of the guide bush 20 and a female screw portion 33 of the valve shaft holder 30 is disengaged by the valve shaft holder 30 being displaced upward excessively with respect to the guide bush 20 during valve opening, the screw engagement may be recovered.

The valve shaft 40 formed of a metallic material includes, from the upper side, the upper small-diameter portion 41, an intermediate large-diameter portion 42 having a larger diameter than the upper small-diameter portion 41, and a valve element portion 43. The configuration of the valve element portion 43 will be described later.

The guide bush 20 includes a thin cylindrical portion 22, a thick cylindrical portion 21, and a base portion 27, which are connected consecutively. Outer diameters of the thin cylindrical portion 22 and the thick cylindrical portion 21 are the same, and an outer diameter of the base portion 27 is greater than those. The intermediate large-diameter portion 42 of the valve shaft 40 is inserted and fit to the thick cylindrical portion 21 in a manner capable of moving relatively in sliding motion in the axis L direction and also capable of rotating relatively about the axis L. The thin cylindrical portion 22 extending upward from the upper end portion of the thick cylindrical portion 21 has a greater inner diameter than the thick cylindrical portion 21, and into which are inserted an upper end of the intermediate large-diameter portion 42 and a lower end of the upper small-diameter portion 41 of the valve shaft 40.

The male screw portion 23 is formed on an outer circumference of the thick cylindrical portion 21 of the guide bush 20. Further, the base portion 27, which is a lower portion of the thick cylindrical portion 21 below the male screw portion 23 is fit by press fitting to a fitting hole 14 of the valve main body 10. A lower stopper 25 is fixed by screw-engagement on a side below the valve shaft holder 30 of the male screw portion 23 with a predetermined clearance from an upper surface 27a of the base portion 27. A fixed stopper body 24 is integrally formed to protrude from the outer circumference of the lower stopper 25.

The valve shaft holder 30 includes a cylindrical portion 31 into which the guide bush 20 is inserted, and the top portion 32. The top portion 32 is penetratingly provided with an insertion hole 32a to which an upper end portion of the upper small-diameter portion 41 of the valve shaft 40 is inserted. The female screw portion 33 being engaged with the male screw portion 23 of the guide bush 20 and constituting the screw feeding mechanism 28, is formed on an inner circumference of the cylindrical portion 31 of the valve shaft holder 30. The screw feeding mechanism 28 is a mechanism that converts a rotational displacement of the rotor 51 with respect to the valve main body 10 into an axial direction displacement of the valve shaft 40.

A movable stopper body 34 is formed to protrude integrally from a lower end of the outer circumference of the cylindrical portion 31 of the valve shaft holder 30. The fixed stopper body 24 and the movable stopper body 34 that constitute the lower portion stopper mechanism 29 mutually engage with each other when the valve shaft holder 30 lowers for a predetermined amount, by which rotational lowering of the valve shaft holder 30 and the valve shaft 40 connected to the valve shaft holder 30 are limited.

Further, the compression coil spring, i.e., urging member, 60 is mounted in a compressed manner between an inner stepped surface formed between the upper small-diameter portion 41 and the intermediate large-diameter portion 42 of the valve shaft 40 and the lower surface of the top portion 32 of the valve shaft holder 30. The compression coil spring 60 urges the valve shaft 40 constantly downward, i.e., valve closing direction, with respect to the valve shaft holder 30.

The valve main body 10 is composed of a cylindrical body made of metal such as brass SUS or the like. The valve main body 10 includes a valve chamber VC having fluid introduced thereto and discharged therefrom, and a first conduit T1 is connected and fixed by brazing etc. to a first opening 10a disposed laterally to an inner circumference of the valve chamber VC. A partition wall 11 is formed to extend inwardly in a radial direction at an intermediate position in the axis L direction of the valve main body 10, and a through hole 11a that communicates the fitting hole 14 and the valve chamber VC is formed at the center of the partition wall 11, wherein the intermediate large-diameter portion 42 of the valve shaft 40 is inserted slidably to the through hole 11a.

An orifice portion 13 formed to correspond to the valve element portion 43 of the valve shaft 40 is formed on an inner side of a bottom wall 12 of the valve main body 10, and a second conduit T2 is connected and fixed by brazing etc. to an annular recess portion 10b formed on the lower surface of the bottom wall 12.

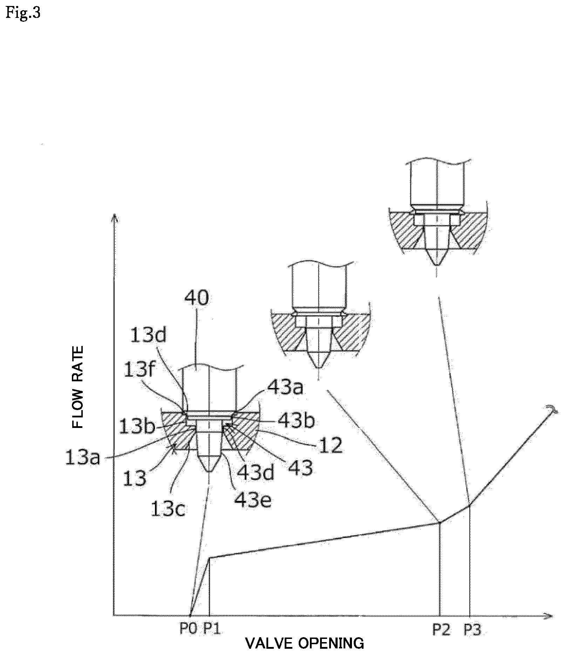

In FIG. 3, the orifice portion 13 includes a first orifice cylindrical portion, i.e., small-diameter orifice cylindrical portion, 13a, a second orifice cylindrical portion, i.e., large-diameter orifice cylindrical portion, 13b formed to communicate with the upper side of the first orifice cylindrical portion 13a and having a shorter axial direction length than the first orifice cylindrical portion 13a, an upper stepped portion 13f (not shown in FIG. 2) having an annular shape formed on a circumference of an upper end of the second orifice cylindrical portion 13b, and an orifice tapered portion 13c that is formed to communicate with the lower side of the first orifice cylindrical portion 13a and that expands in diameter toward the downward direction. A valve seat 13d is formed at an intersection between the first orifice cylindrical portion 13a and the upper stepped portion 13f. It is preferable to form the first orifice cylindrical portion 13a by cutting using a drill etc., and to form the second orifice cylindrical portion 13b etc. having a larger diameter using a milling cutter etc., that is, by a separate processing.

Meanwhile, the valve element portion 43 includes a first valve element conical portion, i.e., large-diameter tapered portion, 43a that is formed on a lower end of the intermediate large-diameter portion 42 and that shrinks in diameter toward the downward direction, a first valve element cylindrical portion, i.e., large-diameter valve element cylindrical portion, 43b that connects to the first valve element conical portion 43a, a second valve element cylindrical portion, i.e., small-diameter valve element cylindrical portion, 43d that connects to the first valve element cylindrical portion 43b and that has a longer axial direction length than the first valve element cylindrical portion 43b, and a third valve element conical portion, i.e., small-diameter tapered portion, 43e that connects to the second valve element cylindrical portion 43d. The third valve element conical portion 43e may be a tapered portion having a two-step shape with different taper angles. In FIG. 2, the tapered portion is illustrated as having a one-step shape. It is preferable to have the valve element portion 43 formed by a turning process.

Now, if an outer diameter of the second valve element cylindrical portion 43d is denoted by B1 and an inner diameter of the first orifice cylindrical portion 13a is denoted by B2, a cross-sectional area Δ1 of a gap between the second valve element cylindrical portion 43d and the first orifice cylindrical portion 13a may be expressed as Δ1 = π ((B2)² - (B1)²)/4.

Further, if an outer diameter of the first valve element cylindrical portion 43b is denoted by B3 and an inner diameter of the second orifice cylindrical portion 13b is denoted by B4, a cross-sectional area Δ2 of a gap between the first valve element cylindrical portion 43b and the second orifice cylindrical portion 13b may be expressed as Δ2 = π((B4)² - (B3)²)/4. It is preferable that Δ1 < Δ2 is satisfied.

Further, when closing the valve, if a distance from a contact between the valve seat 13d and the first valve element conical portion 43a to a lower end of the first valve element cylindrical portion 43b, is denoted by A1, and a distance from an upper end of the second orifice cylindrical portion 13b to a lower end of the second valve element cylindrical portion 43d, is denoted by A2, it is preferable that A1 ≤ A2 is satisfied.

### (Operation of Electrically Driven Valve)

The operation of the electrically driven valve 1 will be described. FIG. 3 is a flow rate characteristic diagram of the electrically driven valve 1, in which the vertical axis shows a flow rate and the horizontal axis shows a valve opening, i.e., axial direction position of the valve shaft, wherein the positional relationship of the valve element portion 43 and the orifice portion 13 are illustrated schematically. The valve opening is proportional to a drive pulse of a control signal applied to the stator coil 52c. According to the present embodiment, the position P0 of FIG. 3 corresponds to a limiting position, and a position having exceeded the position P0 of FIG. 3 corresponds to an open position. Further, immediately before the large-diameter valve element cylindrical portion is withdrawn from an inner side in the radial direction of the large-diameter orifice cylindrical portion, the lower end of the large-diameter valve element cylindrical portion is positioned on the inner side in the radial direction of the large-diameter orifice cylindrical portion. Further, immediately before the small-diameter valve element cylindrical portion is withdrawn from the small-diameter orifice cylindrical portion, a lower end of the small-diameter valve element cylindrical portion is positioned on the inner side in the radial direction of the small-diameter orifice cylindrical portion.

It is assumed that the electrically driven valve 1 is in a valve closed state illustrated in FIG. 1, and the first valve element conical portion 43a of the valve element portion 43 is seated on the valve seat 13d, i.e., the position P0 of FIG. 3. In this state, the second valve element cylindrical portion 43d is positioned on the inner side in the radial direction, i.e., superposed in the axial direction, of the first orifice cylindrical portion 13a, and the first valve element cylindrical portion 43b is positioned on the inner side in the radial direction, i.e., superposed in the axial direction, of the second orifice cylindrical portion 13b. In this state, when a control signal including a drive pulse is supplied to excite the stator coil 52c of the stator 52 and the rotor 51 rotates in one direction, the valve shaft holder 30 and the valve shaft 40 rotate integrally therewith. This rotation is converted by the screw feeding mechanism 28 into an axial direction displacement of the valve shaft 40, and the valve shaft 40 is elevated together with the valve element portion 43.

By the elevation of the valve shaft 40, the second valve element cylindrical portion 43d is displaced in the axial direction with respect to the first orifice cylindrical portion 13a, and the first valve element cylindrical portion 43b is displaced in the axial direction with respect to the second orifice cylindrical portion 13b. Thereby, the first valve element conical portion 43a and the valve seat 13d are separated and a minimum gap exceeding 0 is created, such that fluid such as a refrigerant etc. is passed through from the valve chamber VC via the minimum gap and between the valve element portion 43 and the orifice portion 13 to be flown into the second conduit T2. In a state where the minimum gap between the first valve element conical portion 43a and the valve seat 13d is small, i.e., from the position P0 to the position P1 of FIG. 3, the region where the gap is narrowest between the valve element portion 43 and the orifice portion 13, that is, the region where the flow path cross-sectional area is smallest, which is called a throttle region, is the portion corresponding to the minimum gap between the first valve element conical portion 43a and the valve seat 13d, such that as the minimum gap increases, the flow rate of the fluid passing therethrough is increased linearly.

When the flow path cross-sectional area at the minimum gap between the first valve element conical portion 43a and the valve seat 13d exceeds the cross-sectional area Δ1 (the position P1 of FIG. 3), the throttle region between the valve element portion 43 and the orifice portion 13 becomes the portion corresponding to the gap between the second valve element cylindrical portion 43d and the first orifice cylindrical portion 13a. Since both the outer circumference of the second valve element cylindrical portion 43d and the inner circumference of the first orifice cylindrical portion 13a are cylindrical, even when the valve shaft 40 is eccentrically displaced, the cross-sectional area Δ1 in the throttle region does not change. However, when the second valve element cylindrical portion 43d and the first orifice cylindrical portion 13a are relatively displaced in the axis L direction and the first valve element cylindrical portion 43b and the second orifice cylindrical portion 13b are relatively displaced in the axis L direction, the respectively superposed areas are gradually narrowed, and thereby, the pressure drop between the valve element portion 43 and the orifice portion 13 is gradually reduced, such that the flow rate of fluid passing through the throttle region is gradually increased, which corresponds to the range from the position P1 to the position P2 of FIG. 3.

In the position P2 illustrated in FIG. 3, the first valve element cylindrical portion 43b is withdrawn from the second orifice cylindrical portion 13b, i.e., the first valve element cylindrical portion 43b will no longer be positioned on the inner side in the radial direction of the second orifice cylindrical portion 13b, such that the gap between the first valve element cylindrical portion 43b and the second orifice cylindrical portion 13b will no longer lead to pressure drop. However, at this point of time, since the second valve element cylindrical portion 43d is not withdrawn from the first orifice cylindrical portion 13a, i.e., the second valve element cylindrical portion 43d is positioned on the inner side in the radial direction of the first orifice cylindrical portion 13a, the throttle region is still the area corresponding to the gap between the second valve element cylindrical portion 43d and the first orifice cylindrical portion 13a. Therefore, by the elevation of the valve shaft 40, the second valve element cylindrical portion 43d and the first orifice cylindrical portion 13a are relatively displaced in the axis L direction, such that the superposed areas are gradually narrowed, and the pressure drop between the valve element portion 43 and the orifice portion 13 is further reduced, such that the flow rate of fluid passing through the throttle region is gradually increased, which corresponds from the position P2 to the position P3 of FIG. 3. Due to the difference in pressure drop of the orifice portion 13, the increase rate of flow rate is greater from the position P2 to the position P3 than that from the position P1 to the position P2 in FIG. 3.

In the position P3 illustrated in FIG. 3, the second valve element cylindrical portion 43d is withdrawn from the first orifice cylindrical portion 13a, i.e., the second valve element cylindrical portion 43d will no longer be positioned on the inner side in the radial direction of the first orifice cylindrical portion 13a, such that thereafter, the portion corresponding to the gap between the third valve element conical portion 43e and the upper end of the first orifice cylindrical portion 13a will serve as the throttle region, and as the valve shaft 40 elevates, the flow rate of fluid passing through between the valve element portion 43 and the orifice portion 13 will be increased linearly, such that flow rate adjustment is enabled. Thereafter, the valve shaft 40 is elevated until a valve fully opened state (not shown) is reached.

In contrast, from the valve fully opened state, when a control signal of a reverse characteristic is supplied to excite the stator coil 52c of the stator 52, and the rotor 51 is rotated in the opposite direction, the valve shaft holder 30 and the valve shaft 40 are rotated integrally therewith, and the movement is converted by the screw feeding mechanism 28 into the axial direction displacement of the valve shaft 40, such that the valve shaft 40 is lowered together with the valve element portion 43 until the valve closed state illustrated in FIG. 1 is reached.

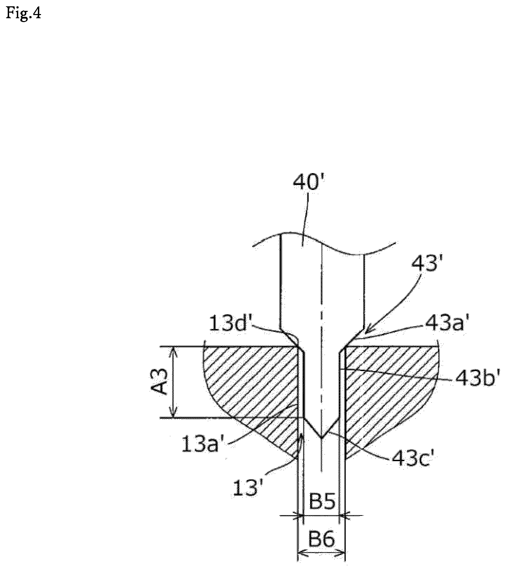

FIG. 4 is a cross-sectional view illustrating a periphery of an orifice portion 13' and a valve element portion 43' of a valve element 40' according to a comparative example, not representing the invention. In FIG. 4, the valve element portion 43' includes a first valve element conical portion 43a', a valve element cylindrical portion 43b', and a second valve element conical portion 43c'. Further, the orifice portion 13' includes an orifice cylindrical portion 13a' and a valve seat 13d'.

Further, in a state where an outer diameter of the valve element cylindrical portion 43b' is denoted by B5 and an inner diameter of the orifice cylindrical portion 13a' is denoted by B6, a cross-sectional area Δ3 of a gap between the valve element cylindrical portion 43b' and the orifice cylindrical portion 13a' may be expressed as Δ3 = π((B6)² - (B5)²)/4. It is preferable if Δ2 > Δ1 > Δ3 is satisfied.

Further, when closing the valve, the distance from the contact between the valve seat 13d' and the first valve element conical portion 43a' to the lower end of the valve element cylindrical portion 43b', is denote by A3. It is preferable if A1 ≤ A2 < A3 is satisfied, and it is preferable if A1 + A2 ≥ A3 is satisfied.

Now, since the valve element cylindrical portion 43b' and the orifice cylindrical portion 13a' are both formed by cutting, there is a dispersion caused by component tolerance in the cross-sectional area Δ3. In order to enable a minute amount of fluid to be flown stably through a minute opening while taking such dispersion into consideration, it is necessary to ensure a long distance A3, by which the number of drive pulses required during the minute opening is increased, such that the flow rate control becomes difficult. Further, since the length of the drill used for cutting the orifice cylindrical portion 13a' is elongated compared to the diameter, the processing difficulty is increased.

In contrast, according to the present embodiment, the orifice portion 13 includes the first orifice cylindrical portion 13a and the second orifice cylindrical portion 13b, such that the length of the drill for cutting the first orifice cylindrical portion 13a may be shortened, and the processing becomes easy, according to which yield is improved. Further, the number of drive pulses from the valve closed state to a point of time at which the first valve element cylindrical portion 43b withdraws from the second orifice cylindrical portion 13b, i.e., the position P2 of FIG. 3, may be reduced, such that the flow rate control becomes easy.

### [Second Embodiment]

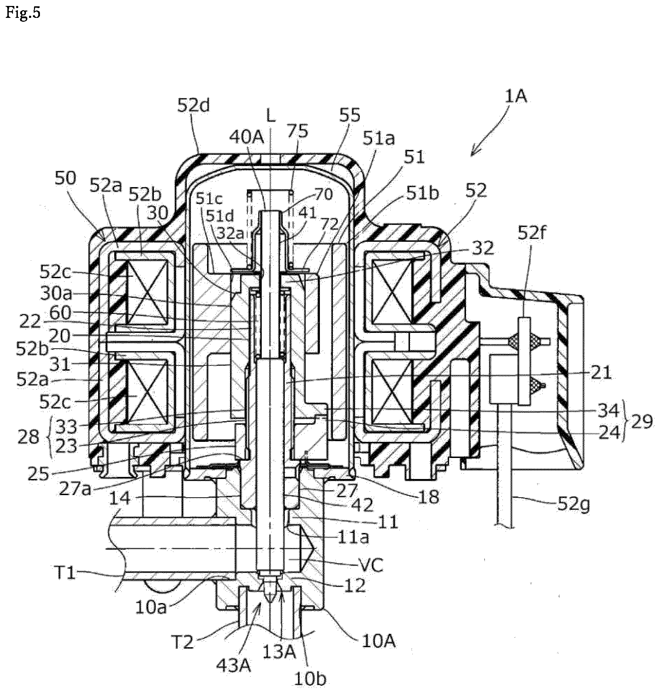

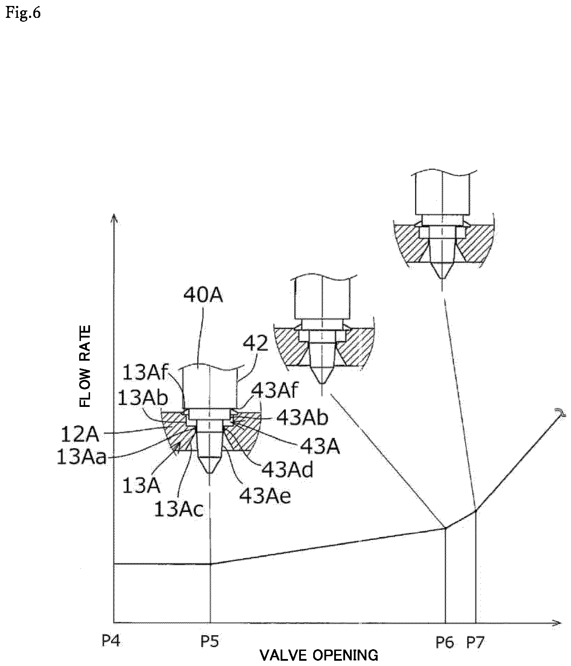

FIG. 5 is a vertical cross-sectional view illustrating an electrically driven valve 1A according to a second embodiment. FIG. 6 is a flow rate characteristic diagram of the electrically driven valve 1A, wherein the vertical axis shows a flow rate and the horizontal axis shows a valve opening, i.e., axial direction position of the valve shaft, wherein the positional relationship between a valve element portion 43A and an orifice portion 13A is illustrated schematically. The electrically driven valve 1A according to the present embodiment is a valve that does not close completely, so-called a non-closing type valve, wherein only the valve element portion 43A of a valve shaft 40A and the orifice portion 13A of a valve main body 10A differ from the first embodiment. Configurations similar to those of the first embodiment are denoted with the same reference numbers, and descriptions thereof are omitted. However, according to the present embodiment, positions P4 to P5 of FIG. 6 correspond to the limiting position, and positions exceeding the position P5 of FIG. 6 correspond to the open position.

The orifice portion 13A includes a first orifice cylindrical portion 13Aa, a second orifice cylindrical portion 13Ab that is formed to communicate with the upper side of the first orifice cylindrical portion 13Aa and having a shorter axial direction length than the first orifice cylindrical portion 13Aa, an upper stepped portion 13Af having an annular shape formed on a circumference of an upper end of the second orifice cylindrical portion 13Ab, and an orifice tapered portion 13Ac that is formed to communicate with the lower side of the first orifice cylindrical portion 13Aa and that expands in diameter toward the downward direction. However, according to the present embodiment, the intersection between the first orifice cylindrical portion 13Aa and the upper stepped portion 13Af does not constitute a valve seat.

Meanwhile, the valve element portion 43A includes a first valve element cylindrical portion 43Ab that connects to a lower end of the intermediate large-diameter portion 42 of the valve shaft 40A, a second valve element cylindrical portion 43Ad that connects to the first valve element cylindrical portion 43Ab and that has a longer axial direction length than the first valve element cylindrical portion 43Ab, and a third valve element conical portion 43Ae that connects to the second valve element cylindrical portion 43Ad. The third valve element conical portion 43Ae may be a tapered portion having a two-step shape with different taper angles. However, a first valve element conical portion is not formed between the intermediate large-diameter portion 42 and the first valve element cylindrical portion 43Ab, and a boundary between the two portions is a stepped surface 43Af.

When the electrically driven valve 1A is in a minimum valve opened state illustrated in FIG. 5, corresponding to positions P4 to P5 in FIG. 6, the stepped surface 43Af and a bottom wall 12A will not come into contact with one another, and a predetermined gap is formed therebetween. In this state, the second valve element cylindrical portion 43Ad is positioned on an inner side in the radial direction of the first orifice cylindrical portion 13Aa, and the first valve element cylindrical portion 43Ab is positioned on an inner side in the radial direction of the second orifice cylindrical portion 13Ab. Therefore, a throttle portion between the valve element portion 43A and the orifice portion 13A is a portion corresponding to the gap between the second valve element cylindrical portion 43Ad and the first orifice cylindrical portion 13Aa. Therefore, change of flow rate will not occur even if the valve shaft 40A is elevated from the position P4 of FIG. 6, i.e., minimum valve opened state, to the position P5 where reduction of pressure drop of the valve element portion 43A and the orifice portion 13A starts. Thereafter, the configuration is similar to the first embodiment.

When the valve shaft 40A is elevated even further, similar to the first embodiment, at the position P6 illustrated in FIG. 6, the first valve element cylindrical portion 43Ab is withdrawn from the second orifice cylindrical portion 13Ab, i.e., the first valve element cylindrical portion 43Ab will no longer be positioned on the inner side in the radial direction of the second orifice cylindrical portion 13Ab, and at the position P7 illustrated in FIG. 6, the second valve element cylindrical portion 43Ad is withdrawn from the first orifice cylindrical portion 13Aa, i.e., the second valve element cylindrical portion 43Ad will no longer be positioned on the inner side in the radial direction of the first orifice cylindrical portion 13Aa, such that together with the elevation of the valve shaft 40A, similar to the first embodiment, the flow rate of the fluid passing through the valve element portion 43A and the orifice portion 13A is increased.

That is, when the valve shaft 40A is displaced from the limiting position to the open position, i.e., from the position P5 towards the position P7, the gap between the second valve element cylindrical portion 43Ad and the first orifice cylindrical portion 13Aa forms a throttle region until the second valve element cylindrical portion 43Ad is withdrawn from the inner side in the radial direction of the first orifice cylindrical portion 13Aa.

The present invention is not limited to the embodiments described above. Modifications of arbitrary components of the embodiments described above is enabled within the scope of the appended claims.

## Claims

1. An electrically driven valve (1, 1A) comprising:
a valve main body (10, 10A) including a valve chamber (VC) and an orifice portion (13, 13A);
a valve shaft (40, 40A) that is inserted to the orifice portion (13, 13A) and that includes a valve element portion (43, 43A); and
a valve shaft driving portion configured to displace the valve shaft (40, 40A) with respect to the valve main body (10, 10A) between a limiting position where a flow rate of fluid passing through the orifice portion (13, 13A) is smallest and an open position where a flow rate of fluid passing through the orifice portion (13, 13A) is increased compared to the limiting position,
wherein the valve element portion (43, 43A) includes a large-diameter valve element cylindrical portion (43b), a small-diameter valve element cylindrical portion (43d) having a smaller diameter than the large-diameter valve element cylindrical portion (43b) and connecting to the large-diameter valve element cylindrical portion (43b) in a downward direction, and a small-diameter tapered portion (43e) that is formed continuously to the small-diameter valve element cylindrical portion (43d) in a downward direction,
wherein the orifice portion (13, 13A) includes a small-diameter orifice cylindrical portion (13a), and a large-diameter orifice cylindrical portion (13b) having a greater diameter than the small-diameter orifice cylindrical portion (13a),
wherein, in a state where the valve shaft (40, 40A) is at the limiting position, the small-diameter valve element cylindrical portion (43d) is positioned on an inner side in a radial direction of the small-diameter orifice cylindrical portion (13a) and the large-diameter valve element cylindrical portion (43b) is positioned on an inner side in a radial direction of the large-diameter orifice cylindrical portion (13b), and
wherein, in a state where the valve shaft (40, 40A) is displaced from the limiting position to the open position, after the large-diameter valve element cylindrical portion (43b) has been withdrawn from the inner side in the radial direction of the large-diameter orifice, the small-diameter valve element cylindrical portion (43d) is withdrawn from the inner side in the radial direction of the small-diameter orifice cylindrical portion (13a), and
wherein a cross-sectional area (Δ1) of a gap between the small-diameter valve element cylindrical portion (43d) and the small-diameter orifice cylindrical portion (13a) is smaller than a cross-sectional area (Δ2) of a gap between the large-diameter valve element cylindrical portion (43b) and the large-diameter orifice cylindrical portion (13b).

2. The electrically driven valve (1, 1A) according to claim 1,
wherein, in a state where the valve shaft (40, 40A) is displaced from the limiting position to the open position, after the small-diameter valve element cylindrical portion (43d) has been withdrawn from the inner side in the radial direction of the small-diameter orifice cylindrical portion (13a), a gap between an end portion of the small-diameter orifice cylindrical portion (13a) and the small-diameter tapered portion (43e) forms a throttle region.

3. The electrically driven valve (1, 1A) according to claim 2,
wherein the valve element portion (43, 43A) includes a large-diameter tapered portion (43b), the orifice portion (13, 13A) includes a valve seat (13d), and in the limiting position, the large-diameter tapered portion (43b) is seated on the valve seat (13d).

4. The electrically driven valve (1, 1A) according to claim 3,
wherein, in a state where the valve shaft (40, 40A) is displaced from the limiting position to the open position, in a state after a flow path cross-sectional area between the small-diameter valve element cylindrical portion (43d) and the small-diameter orifice cylindrical portion (13a) exceeds a flow path cross-sectional area between the large-diameter tapered portion and the valve seat (13d), a gap between the small-diameter valve element cylindrical portion (43d) and the small-diameter orifice cylindrical portion (13a) forms a throttle region.

5. The electrically driven valve (1, 1A) according to claim 1 or claim 2,
wherein, in the limiting position, the valve element portion (43, 43A) is not in contact with the orifice portion (13, 13A).

6. The electrically driven valve (1, 1A) according to claim 5,
wherein, in a state where the valve shaft (40, 40A) is displaced from the limiting position to the open position, a gap between the small-diameter valve element cylindrical portion (43d) and the small-diameter orifice cylindrical portion (13a) forms a throttle region until the small-diameter valve element cylindrical portion (43d) is withdrawn from the inner side in the radial direction of the small-diameter orifice cylindrical portion (13a).

## Patentansprüche

1. Elektrisch angetriebenes Ventil (1, 1A), umfassend:
einen Ventilhauptkörper (10, 10A), der eine Ventilkammer (VC) und einen Öffnungsabschnitt (13, 13A) beinhaltet;
einen Ventilschaft (40, 40A), der in den Öffnungsabschnitt (13, 13A) eingesetzt ist und der einen Ventilelementabschnitt (43, 43A) beinhaltet; und
einen Ventilschaftantriebsabschnitt, der konfiguriert ist, um den Ventilschaft (40, 40A) in Bezug auf den Ventilhauptkörper (10, 10A) zwischen einer Begrenzungsposition, in der eine Strömungsrate von Fluid, das durch den Öffnungsabschnitt (13, 13A) strömt, am kleinsten ist, und einer offenen Position, in der eine Strömungsrate von Fluid, das durch den Öffnungsabschnitt (13, 13A) strömt, im Vergleich zu der Begrenzungsposition erhöht ist, zu verschieben,
wobei der Ventilelementabschnitt (43, 43A) einen zylindrischen Abschnitt (43b) des Ventilelements mit großem Durchmesser, einen zylindrischen Abschnitt (43d) des Ventilelements mit kleinem Durchmesser, der einen kleineren Durchmesser als der zylindrische Abschnitt (43b) des Ventilelements mit großem Durchmesser aufweist und mit dem zylindrischen Abschnitt (43b) des Ventilelements mit großem Durchmesser in einer Abwärtsrichtung verbunden ist, und einen sich verjüngenden Abschnitt (43e) mit kleinem Durchmesser, der kontinuierlich zu dem zylindrischen Abschnitt (43d) des Ventilelements mit kleinem Durchmesser in einer Abwärtsrichtung ausgebildet ist, beinhaltet,
wobei der Öffnungsabschnitt (13, 13A) einen zylindrischen Abschnitt (13a) der Öffnung mit kleinem Durchmesser und einen zylindrischen Abschnitt (13b) der Öffnung mit großem Durchmesser, der einen größeren Durchmesser als der zylindrische Abschnitt (13a) der Öffnung mit kleinem Durchmesser aufweist, beinhaltet,
wobei in einem Zustand, in dem sich der Ventilschaft (40, 40A) an der Begrenzungsposition befindet, der zylindrische Abschnitt (43d) des Ventilelements mit kleinem Durchmesser auf einer Innenseite in einer radialen Richtung des zylindrischen Abschnitts (13a) der Öffnung mit kleinem Durchmesser positioniert ist und der zylindrische Abschnitt (43b) des Ventilelements mit großem Durchmesser auf einer Innenseite in einer radialen Richtung des zylindrischen Abschnitts (13b) der Öffnung mit großem Durchmesser positioniert ist, und
wobei in einem Zustand, in dem der Ventilschaft (40, 40A) von der Begrenzungsposition zu der offenen Position verschoben wird, nachdem der zylindrische Abschnitt (43b) des Ventilelements mit großem Durchmesser von der Innenseite in der radialen Richtung der Öffnung mit großem Durchmesser zurückgezogen wurde, der zylindrische Abschnitt (43d) des Ventilelements mit kleinem Durchmesser von der Innenseite in der radialen Richtung des zylindrischen Abschnitts (13a) der Öffnung mit kleinem Durchmesser zurückgezogen wird, und
wobei eine Querschnittsfläche (Δ1) eines Spalts zwischen dem zylindrischen Abschnitt (43d) des Ventilelements mit kleinem Durchmesser und dem zylindrischen Abschnitt (13a) der Öffnung mit kleinem Durchmesser kleiner als eine Querschnittsfläche (Δ2) eines Spalts zwischen dem zylindrischen Abschnitt (43b) des Ventilelements mit großem Durchmesser und dem zylindrischen Abschnitt (13b) der Öffnung mit großem Durchmesser ist.

2. Elektrisch angetriebenes Ventil (1, 1A) nach Anspruch 1,
wobei in einem Zustand, in dem der Ventilschaft (40, 40A) von der Begrenzungsposition zu der offenen Position verschoben wird, nachdem der zylindrische Abschnitt (43d) des Ventilelements mit kleinem Durchmesser von der Innenseite in der radialen Richtung des zylindrischen Abschnitts (13a) der Öffnung mit kleinem Durchmesser zurückgezogen wurde, ein Spalt zwischen einem Endabschnitt des zylindrischen Abschnitts (13a) der Öffnung mit kleinem Durchmesser und dem sich verjüngenden Abschnitt (43e) mit kleinem Durchmesser einen Drosselbereich bildet.

3. Elektrisch angetriebenes Ventil (1, 1A) nach Anspruch 2,
wobei der Ventilelementabschnitt (43, 43A) einen sich verjüngenden Abschnitt (43b) mit großem Durchmesser beinhaltet, der Öffnungsabschnitt (13, 13A) einen Ventilsitz (13d) beinhaltet und in der Begrenzungsposition der sich verjüngende Abschnitt (43b) mit großem Durchmesser auf dem Ventilsitz (13d) sitzt.

4. Elektrisch angetriebenes Ventil (1, 1A) nach Anspruch 3,
wobei in einem Zustand, in dem der Ventilschaft (40, 40A) von der Begrenzungsposition zu der offenen Position verschoben wird, in einem Zustand, nachdem eine Strömungswegquerschnittsfläche zwischen dem zylindrischen Abschnitt (43d) des Ventilelements mit kleinem Durchmesser und dem zylindrischen Abschnitt (13a) der Öffnung mit kleinem Durchmesser eine Strömungswegquerschnittsfläche zwischen dem sich verjüngenden Abschnitt mit großem Durchmesser und dem Ventilsitz (13d) überschreitet, ein Spalt zwischen dem zylindrischen Abschnitt (43d) des Ventilelements mit kleinem Durchmesser und dem zylindrischen Abschnitt (13a) der Öffnung mit kleinem Durchmesser einen Drosselbereich bildet.

5. Elektrisch angetriebenes Ventil (1, 1A) nach Anspruch 1 oder Anspruch 2,
wobei in der Begrenzungsposition der Ventilelementabschnitt (43, 43A) nicht mit dem Öffnungsabschnitt (13, 13A) in Kontakt steht.

6. Elektrisch angetriebenes Ventil (1, 1A) nach Anspruch 5,
wobei in einem Zustand, in dem der Ventilschaft (40, 40A) von der Begrenzungsposition zu der offenen Position verschoben wird, ein Spalt zwischen dem zylindrischen Abschnitt (43d) des Ventilelements mit kleinem Durchmesser und dem zylindrischen Abschnitt (13a) der Öffnung mit kleinem Durchmesser einen Drosselbereich bildet, bis der zylindrische Abschnitt (43d) des Ventilelements mit kleinem Durchmesser von der Innenseite in der radialen Richtung des zylindrischen Abschnitts (13a) der Öffnung mit kleinem Durchmesser zurückgezogen wird.

## Revendications

1. Soupape à commande électrique (1, 1A) comportant :
un corps principal de soupape (10, 10A) incluant une chambre de soupape (VC) et une partie d'orifice (13, 13A) ;
une tige de soupape (40, 40A) qui est insérée jusqu'à la partie d'orifice (13, 13A) et qui inclut une partie d'élément de soupape (43, 43A) ; et
une partie d'entraînement de tige de soupape configurée pour déplacer la tige de soupape (40, 40A) par rapport au corps principal de soupape (10, 10A) entre une position limite où un débit de fluide passant à travers la partie d'orifice (13, 13A) est le plus faible, et une position ouverte où un débit de fluide passant à travers la partie d'orifice (13, 13A) est augmenté comparé à la position limite,
dans laquelle la partie d'élément de soupape (43, 43A) inclut une partie cylindrique d'élément de soupape de grand diamètre (43b), une partie cylindrique d'élément de soupape de petit diamètre (43d) ayant un diamètre plus petit que la partie cylindrique d'élément de soupape de grand diamètre (43b) et reliée à la partie cylindrique d'élément de soupape de grand diamètre (43b) dans une direction allant vers le bas, et une partie conique de petit diamètre (43e) qui est formée de façon continue jusqu'à la partie cylindrique d'élément de soupape de petit diamètre (43d) dans une direction allant vers le bas,
dans laquelle la partie d'orifice (13, 13A) inclut une partie cylindrique d'orifice de petit diamètre (13a) et une partie cylindrique d'orifice de grand diamètre (13b) ayant un diamètre plus grand que la partie cylindrique d'orifice de petit diamètre (13a),
dans laquelle, dans un état où la tige de soupape (40, 40A) est à la position limite, la partie cylindrique d'élément de soupape de petit diamètre (43d) est positionnée sur un côté intérieur dans une direction radiale de la partie cylindrique d'orifice de petit diamètre (13a) et la partie cylindrique d'élément de soupape de grand diamètre (43b) est positionnée sur un côté intérieur dans une direction radiale de la partie cylindrique d'orifice de grand diamètre (13b), et
dans laquelle, dans un état où la tige de soupape (40, 40A) est déplacée de la position limite à la position ouverte, après que la partie cylindrique d'élément de soupape de grand diamètre (43b) a été extraite du côté intérieur dans la direction radiale de la partie cylindrique d'orifice de grand diamètre (13b), la partie cylindrique d'élément de soupape de petit diamètre (43d) est extraite du côté intérieur dans la direction radiale de la partie cylindrique d'orifice de petit diamètre (13a), et
dans laquelle une aire de section transversale (Δ1) d'un espace entre la partie cylindrique d'élément de soupape de petit diamètre (43d) et la partie cylindrique d'orifice de petit diamètre (13a) est inférieure à une aire de section transversale (Δ2) d'un espace entre la partie cylindrique d'élément de soupape de grand diamètre (43b) et la partie cylindrique d'orifice de grand diamètre (13b).

2. Soupape à commande électrique (1, 1A) selon la revendication 1,
dans laquelle, dans un état où la tige de soupape (40, 40A) est déplacée de la position limite à la position ouverte, après que la partie cylindrique d'élément de soupape de petit diamètre (43d) a été extraite du côté intérieur dans la direction radiale de la partie cylindrique d'orifice de petit diamètre (13a), un espace entre une partie d'extrémité de la partie cylindrique d'orifice de petit diamètre (13a) et la partie conique de petit diamètre (43e) forme une zone d'étranglement.

3. Soupape à commande électrique (1, 1A) selon la revendication 2,
dans laquelle la partie d'élément de soupape (43, 43A) inclut une partie conique de grand diamètre (43b), la partie d'orifice (13, 13A) inclut un siège de soupape (13d), et dans la position limite, la partie conique de grand diamètre (43b) est en appui sur le siège de soupape (13d).

4. Soupape à commande électrique (1, 1A) selon la revendication 3,
dans laquelle, dans un état où la tige de soupape (40, 40A) est déplacée de la position limite à la position ouverte, dans un état après qu'une aire de section transversale de trajet d'écoulement entre la partie cylindrique d'élément de soupape de petit diamètre (43d) et la partie cylindrique d'orifice de petit diamètre (13a) dépasse une aire de section transversale de trajet d'écoulement entre la partie conique de grand diamètre et le siège de soupape (13d), un espace entre la partie cylindrique d'élément de soupape de petit diamètre (43d) et la partie cylindrique d'orifice de petit diamètre (13a) forme une zone d'étranglement.

5. Soupape à commande électrique (1, 1A) selon la revendication 1 ou la revendication 2,
dans laquelle, dans la position limite, la partie d'élément de soupape (43, 43A) n'est pas en contact avec la partie d'orifice (13, 13A).

6. Soupape à commande électrique (1, 1A) selon la revendication 5,
dans laquelle, dans un état où la tige de soupape (40, 40A) est déplacée de la position limite à la position ouverte, un espace entre la partie cylindrique d'élément de soupape de petit diamètre (43d) et la partie cylindrique d'orifice de petit diamètre (13a) forme une zone d'étranglement jusqu'à ce que la partie cylindrique d'élément de soupape de petit diamètre (43d) soit extraite du côté intérieur dans la direction radiale de la partie cylindrique d'orifice de petit diamètre (13a).
